# EUROPEAN PATENT SPECIFICATION

(11) **EP 0 423 200 B1**
(45) Date of publication and mention of the grant of the patent: **24.01.1996**
(21) Application number: 89908123.6
(22) Date of filing: 19.06.1989
(51) Int. Cl.: G06F 7/04, G08B 5/22

(54) **METHOD OF AND APPARATUS FOR ACKNOWLEDGING AND PARTIALLY ANSWERING A PAGING SIGNAL**
VERFAHREN UND VORRICHTUNG ZUR ANERKENNUNG UND TEILBEANTWORTUNG EINES PERSONENRUFSIGNALS
PROCEDE ET APPAREIL D'EMISSION D'ACCUSE DE RECEPTION ET DE REPONSE PARTIELLE A UN SIGNAL DE RECHERCHE DE PERSONNE

(30) Priority: 01.07.1988 US 214569
(43) Date of publication of application: 24.04.1991
(73) Proprietor: MOTOROLA, INC., Schaumburg, IL 60196 (US)
(72) Inventor: DAVIS, Walter, Lee, Coral Springs, FL 33065 (US)
(74) Representative: Lupton, Frederick
(86) International application number: US8902660
(87) International publication number: WO9000277

(56) References cited:
- DE-A- 3 735 295
- US-A- 4 247 908
- US-A- 4 356 484
- US-A- 4 696 054

## Description

### Background to the Invention

The present invention pertains to paging systems and more specifically to paging systems in which the pager is capable of responding with an acknowledge signal and a partial answer when a page has been received.

In many paging systems it is desirable to know when a page has been received by a designated pager. Due to power and energy dissipation limits imposed by the small size of the batteries used in paging receivers, the power level and transmission time that can be used to send signals acknowledging receipt of the page are extremely limited. Because the power level and transmission time during which RF signals can be transmitted are very limited, the coding scheme must be very simple.

In many instances the person having a page transmitted to the paging receiver desires additional information from the person being paged. In these instances it would be extremely advantageous if the additional information could be transmitted with the acknowledge signal.

DE 37 35 295 describes a pager that responds to a page by issuing an acknowledge signal containing at least a part of the message conveyed to the pager in the page.

US-A-4,696,054 describes a pager having a keyboard with a number of switches each actuated to assign a specific message serial number to a specific received message.

### Summary of the Invention

According to a first aspect of the present invention there is provided a method of transmitting a signal from a paging receiver of a user acknowledging reception of a caller initiated response requested page and simultaneously indicating a user designated response to said page, said method comprising the steps of: receiving with the paging receiver a paging signal including a message containing a caller composed question and a plurality of caller composed responses to the question; visually displaying on the paging receiver the caller composed question and corresponding plurality of responses of the received message; designating to the paging receiver a user selected response from said displayed plurality of responses; and transmitting a signal from the paging receiver to acknowledge receipt of the paging signal, said transmitted signal being indicative of the user designated response to the question of the received paging signal.

In another aspect of the present invention there is provided a pager for acknowledging reception of a paging signal transmitted from a central transmitter of a paging system having an acknowledge receiver, the pager comprising: a remote pager receiver having a predetermined address and an output; an address signal decoder coupled to the output of said remote pager receiver and providing an indicator enable signal and an acknowledge enable signal when signals coded with the predetermined address of said remote pager receiver are received; indicator means coupled to said remote pager receiver and said address signal decoder for indicating received paging signals from said remote pager receiver in response to reception of an indicator enable signal from said address signal decoder; an acknowledge signal encoder including apparatus for generating a plurality of differently encoded acknowledge signals and means for selecting a desired one of the plurality of differently encoded acknowledge signals, said encoder being coupled to receive the acknowledge enable signal from said address signal decoder and provide the selected one of the plurality of differently encoded acknowledge signals in response to operation of said means for selecting; and a remote pager transmitter coupled to said acknowledge signal encoder for receiving therefrom the selected one of the plurality of differently encoded acknowledge signals and for transmitting a signal encoded with the selected one of the plurality of differently encoded acknowledge signals to acknowledge receipt of the paging signal.

The present invention advantageously provides a new and improved method and apparatus for acknowledging the receipt of paging signals in a paging system. Beneficially, the present invention simultaneously acknowledges receipt of a paging signal and responds with at least a partial answer. Furthermore, the present invention optimizes the information that can be conveyed by utilizing a limited set of acknowledge signals each assigned a variable set of meanings.

An exemplary embodiment of the present invention will now be described with reference to the accompanying drawings.

### Brief Description of the Drawings

FIG. 1 is a simplified block diagram of a paging system, including a remote pager having transmission capabilities, embodying the present invention;
FIG. 2 is a simplified block diagram of the remote pager illustrated in FIG. 1; and
FIG. 3 is a view of a top plan of the display and control of the pager of FIG. 1.

### Detailed Description of a Preferred Embodiment

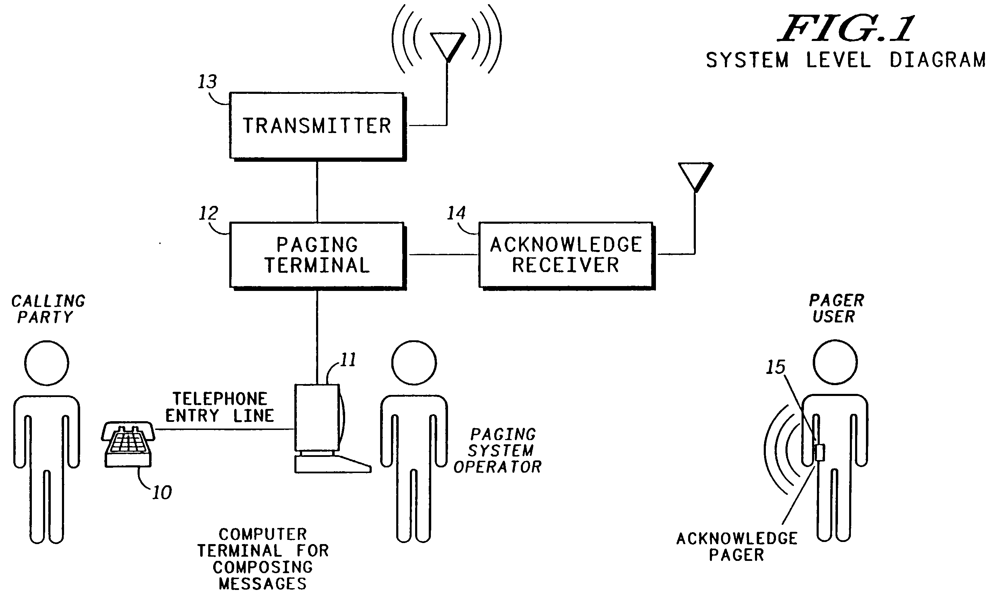

Referring specifically to FIG. 1, a paging system is illustrated which embodies the present invention. The paging system includes a telephone (10) which is utilized by a calling party to initiate a page. Telephone (10) is coupled to a computer terminal (11) by means of a standard telephone line. Computer terminal (11) is controlled by a paging system operator who composes messages on the computer terminal in response to messages from the calling party of telephone (10). Computer terminal (11) is coupled through a paging terminal (12) to a central transmitter (13) and an acknowledge receiver (14). It will of course be understood by those skilled in the art that transmitter (13) and receiver (14) may be in a single unit utilizing a single antenna or they may actually be positioned remotely from each other. For example, in any specific area it may be advantageous to interconnect a plurality of spaced apart receivers in a network around the area to reduce the amount of power required for a pager to reach any specific receiver. The system further includes at least one remotely located pager (15).

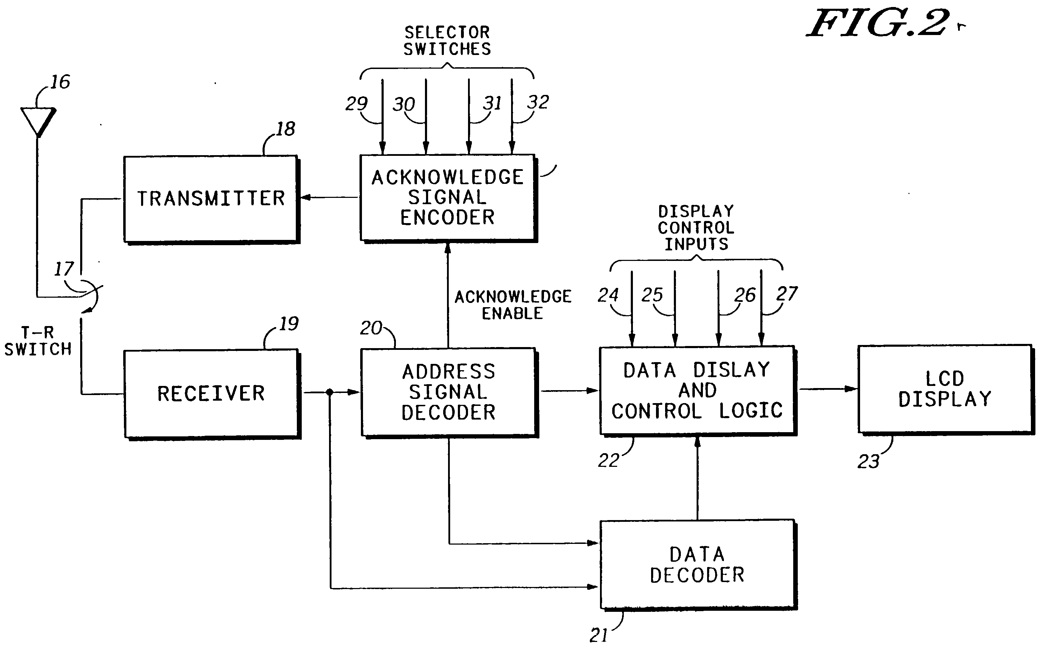

Referring specifically to FIG. 2, the remote pager (15) is illustrated in simplified block form. The pager (15) includes an antenna (16) coupled through a transmit/receive switch (17) to either a transmitter (18) or a receiver (19). Antenna (16), switch (17), transmitter (18) and receiver (19) operate in the normal well known fashion and will not be elaborated upon further.

The output of receiver (19) is coupled to an address signal decoder (20) and to a data decoder (21). The output of data decoder (21) is coupled to a data display and control logic circuit (22), which in turn controls an LCD display (23). A plurality of display control inputs (24) through (27) are coupled to the data display and control logic circuit (22) from external controls which will be described presently. Address signal decoder (20) provides enable signals to data decoder (21), data display and control logic (22) and an acknowledge signal encoder (28). The output of acknowledge signal encoder (28) is coupled to a modulation input of transmitter (18). Acknowledge signal encoder (28) also has a plurality of inputs (29) through (32) from a plurality of message selector controls which will be described presently.

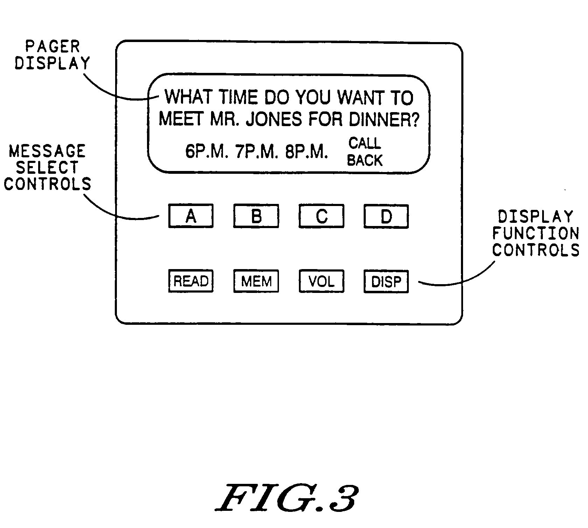

Referring specifically to FIG. 3, a plan view of the display (23) and controls of pager (15) is illustrated. A plurality of switches A, B, C and D are illustrated as the message selector controls for inputs (29) through (32), respectively, of acknowledge signal encoder (28). The switches A through D may be simple push button switches, toggle switches or any other type of switch which may be utilized for the purposes to be described presently. Four display function controls, READ, MEMORY, VOLUME and DISPLAY, are included on the control panel of the pager (15) and are connected to inputs (24) through (27), respectively, of data display and control logic circuit (22). Data display and control logic circuit (22) contains a memory and the circuitry required to store and format a message for proper display by LCD display (23). The READ function control provides a signal on input (24) which causes control logic circuit (22) to bring a message from the memory and supply it to LCD display (23). The function control labelled MEMORY provides a signal on input (25) to cause control logic circuit (22) to store the next message received from data decoder (21) in the memory. The function control labelled VOLUME provides a signal on input (26) to logic circuit (22) which changes the volume, in a prescribed direction, of any acoustic signalling device that may be coupled to logic circuit (22) in addition to LCD display (23). Finally, the function control labelled DISPLAY supplies signals to logic circuit (22) on input (27) to cause logic circuit (22) to change the brightness of display (23).

Each of the message selector switches A,B,C, and D, supply signals to acknowledge signal encoder (28) which cause encoder (28) to supply a different code to transmitter (18) for modulating the RF signal produced thereby. It will of course be understood by those skilled in the art that there are a great variety of codes which may be utilized by acknowledge signal encoder (28), induding a simple digital code, frequency or amplitude modulation, or any of a variety of other well known schemes. It will also be understood that the message selector switches A, B, C, and D, can simply be push button switches which automatically cause an encoded transmission upon depression thereof or they could be a type of toggle switch which simply controls acknowledge encoder (28) and transmission occurs in response to a transmission switch (not shown) which is operated after the message selector controls are properly positioned. In this preferred embodiment the message selector switches A, B, C, and D, are simple push button switches which automatically cause a transmission upon the depression thereof, which transmission is encoded with a simple digital code.

In the operation of the paging system, a calling party contacts the paging system operator at computer terminal (11) by means of telephone (10). He requests a page of a specific pager, for example pager (15), and further requests the paging system operator compose a message asking the owner of pager (15) what time he would like to meet Mr. Jones for dinner. In addition to the primary message (the question), the calling party provides the paging system operator with a number of alternate responses, or times, he will be available for dinner; 6pm, 7pm, or 8pm. The calling party further instructs the paging system operator that in the event none of these times are available to the pager user being contacted that he should call back the calling party. The paging system operator composes a message on computer terminal (11) which includes the primary message and the alternate responses as shown on LCD display (23) of Fig. 3. The message is transmitted by way of paging terminal (12) and transmitter (13) to pager (15).

The message, which also contains a pager address, is received by receiver (19) and supplied to address signal decoder (20) and data decoder (21). Address signal decoder (20) decodes the address portion of the message and, if the address is the same as pager (15), supplies an acknowledge enable signal to acknowledge signal encoder (28), an enable signal to data display and control logic (22) and an enable signal to data decoder (21). When data decoder receives the enable signal from address signal decoder (20) the message from receiver (19) is decoded and the data is supplied to logic circuit (22). Since logic circuit (22) has also received an enable signal, the decoded messages activates an acoustic signal or other alert device in pager (15) and is supplied to the memory forming a portion of data display and control logic (22). When the pager user hears the acoustic signal and operates the READ control the message appears at LCD display (23) of pager (15) as illustrated in FIG. 3.

Upon reading the message on the pager LCD display (23), the pager user determines a response to the question and selects a message selector switch A, B, C, or D which corresponds with the answer he desires to transmit. The pager user then depresses the message selector switch which automatically transmits an encoded message from transmitter (18) to acknowledge receiver (14). The received response is conducted through paging terminal (12) to computer terminal (11). Computer terminal (11) matches the received encoded signal with the corresponding alternate response, i.e. 6pm, 7pm, 8pm, or call back, and provides the alternate response to the paging system operator by means of a display or the like.

The paging system operator then provides the calling party with the selected alternate response. It should be understood that the message from the pager might be interpreted by the computer terminal and an appropriate recorded voice response (or other response signal) relayed to the calling party without intervention by the paging system operator. Thus, the pager has provided an acknowledge signal as well as at least a partial response to the question of the calling party.

While no specific message coding format has been described herein it will be understood by those skilled in the art that a variey of message formats may be utilized. A typical message format which might be utilized in the present paging system is described in the book entitled "A Standard Code for Radiopaging" published in July of 1979 wherein the international name for POCSAG is "CCIR Radiopaging Code No. 1" (Rec 584, Geneva, 1982, POCSAG-Code); U.S. Patent-No. 4,518,961, entitled "Universal Paging Device With Power Conservation", issued May 21, 1985; and a copending PCT patent application entitled "System for Off-The-Air Reprogramming of Communication Receivers", bearing serial number PCT/US87/00004, filed January 2, 1987.

The present invention optimizes the information that can be conveyed with a limited set of acknowledge signals by assigning a variable set of meanings to each acknowledge signal. This functional assignment is accomplished by transmitting the meaning of each of the return signals as part of the initial paging signal. Since the central transmitter is not handicapped by limited power and/or time, the transmission of the additional portion of the message is not a problem. While the pager illustrated utilizes an LCD display, it will be understood by those skilled in the art that other types of indicators might be utilized, such as a simple voice speaker, although this would not be as desirable as the described display because of the possibility of errors and the like.

Thus, a method and apparatus for acknowledging reception of a paging signal and simultaneously responding with at least a partial answer is disclosed. Since the central transmitter transmits the message and a plurality of possible or alternate responses the battery of the remote pager is used for only a minimum response signal. Also, the maximum amount of information can be conveyed by the minimum response signal.

While I have shown and described a specific embodiment of this invention, further modifications and improvements will occur to those skilled in the art.

## Claims

1. A method of transmitting a signal from a paging receiver (15) of a user acknowledging reception of a caller initiated response requested page and simultaneously indicating a user designated response to said page, said method comprising the steps of:
receiving with the paging receiver (15) a paging signal including a message containing a caller composed question and a plurality of caller composed responses to the question;
visually displaying on the paging receiver (15) the caller composed question and corresponding plurality of responses of the received message;
designating to the paging receiver (15) a user selected response from said displayed plurality of responses; and
transmitting a signal from the paging receiver (15) to acknowledge receipt of the paging signal, said transmitted signal being indicative of the user designated response to the question of the received paging signal.

2. A pager (15) for acknowledging reception of a paging signal transmitted from a central transmitter (13) of a paging system having an acknowledge receiver (14), the pager (15) comprising:
a remote pager receiver (19) having a predetermined address and an output;
an address signal decoder (20) coupled to the output of said remote pager receiver (19) and providing an indicator enable signal and an acknowledge enable signal when signals coded with the predetermined address of said remote pager receiver (19) are received;
indicator means (22) coupled to said remote pager receiver (19) and said address signal decoder (20) for indicating received paging signals from said remote pager receiver (19) in response to reception of an indicator enable signal from said address signal decoder (20);
an acknowledge signal encoder including apparatus (29-32) for generating a plurality of differently encoded acknowledge signals and means (A-D) for selecting a desired one of the plurality of differently encoded acknowledge signals, said encoder being coupled to receive the acknowledge enable signal from said address signal decoder (20) and provide the selected one of the plurality of differently encoded acknowledge signals in response to operation of said means for selecting; and
a remote pager transmitter (18) coupled to said acknowledge signal encoder for receiving therefrom the selected one of the plurality of differently encoded acknowledge signals and for transmitting a signal encoded with the selected one of the plurality of differently encoded acknowledge signals to acknowledge receipt of the paging signal.

## Patentansprüche

1. Verfahren zum Senden eines Signals von einem Personenrufempfänger (15) eines Benutzers zum Quittieren des Empfangs eines von einem Anrufer initiierten eine Antwort erfordernden Personenrufs und zum gleichzeitigen Bezeichnen einer durch den Benutzer zugeordneten Antwort auf den Personenruf, welches Verfahren die Schritte umfaßt:
des Empfangens eines Personenrufsignals mit dem Personenrufempfänger (15), das eine Nachricht enthält mit einer von einem Anrufer zusammengesetzten Frage und einer Vielzahl von durch den Anrufer zusammengesetzte Antworten auf die Frage;
der Sichtanzeige der durch de Anrufer zusammengesetzten Frage und der entsprechenden Vielzahl von Antworten der empfangenen Nachricht an dem Personenrufempfänger; des Benennens einer vom Benutzer aus der angezeigten Antwortvielfalt ausgewählten Antwort für den Personenrufempfänger (15); und
des Sendens eines Signals von dem Personenrufempfänger (15) zum Quittieren des Empfangs des Personenrufsignals, welches gesendete Signal für die vom Benutzer benannte Antwort auf die Frage im empfangenen Personenrufsignal bezeichnend ist.

2. Personenrufgerät (15) zum Quittieren des Empfangs eines von einem zentralen Sender (13) eines Personenrufsystems mit einem Quittierungsempfänger (14) gesendeten Personenrufsignals, welches Personenrufgerät (15) umfaßt:
einen fernliegenden Personenrufempfanger (19) mit einer vorgegebenen Adresse und einem Ausgang;
einen an den Ausgang des fernliegenden Personenrufempfängers gekoppelten Adreßsignaldekodierer (20), der ein Anzeige-Freigabesignal und ein Quittierungs-Freigabesignal schafft, wenn mit der vorgegebenen Adresse des fernliegenden Personenrufempfängers (19) kodierte Signale empfangen werden;
mit dem fernliegenden Personenrufempfänger (19) und dem Adreßsignaldekodierer (20) gekoppeltes Benennungsmittel (22), um von dem fernliegenden Personenrufempfänger empfangene Personenrufsignale in Reaktion auf den Empfang eines Benennungs-Freigabesignals von dem Adreßsignal-Dekodierer (20) zu benennen;
einen Quittierungssignalkodierer, der Vorrichtungen (29-32) zum Erzeugen einer Vielzahl unterschiedlich kodierter Quittierungssignale und Mittel (A -D) zum Auswählen eines erwünschten aus der Vielzahl unterschiedlich kodierter Quittierungssignale enthält, welcher Kodierer zum Empfangen des Quittierungs-Freigabesignals von dem Adreßsignal-Dekodierer und zum Schaffen des ausgewählten aus der Vielzahl unterschiedlich kodierter Quittierungssignale in Reaktion auf den Betrieb des Auswahlmittels angeschlossen ist; und einen entfernt liegenden Sender (18), der mit dem Quittierungssignalkodierer gekoppelt ist, um davon das ausgewählte aus der Vielzahl unterschiedlich kodierter Quittierungssignale zu erhalten und ein mit dem ausgewählten aus der Vielzahl unterschiedlich kodierter Quittierungssignale kodiertes Signal zum Quittieren des Empfangs des Personenrufsignals zu senden.

## Revendications

1. Procédé d'émission d'un signal depuis un récepteur d'appel de personne (15) d'un utilisateur accusant réception d'un appel de personne à réponse demandée émise par un appelant et indiquant simultanément une réponse, désignée par l'utilisateur, audit appel de personne, ledit procédé comprenant les étapes consistant à :
recevoir avec le récepteur d'appel de personne (15) un signal d'appel de personne comprenant un message comportant une question composée par l'appelant et une pluralité de réponses, composées par l'appelant, à la question ;
afficher visuellement sur le récepteur d'appel de personne (15) la question composée par l'appelant et une pluralité de réponse correspondante du message reçu ;
désigner au récepteur d'appel de personne (15) une réponse choisie par l'utilisateur parmi ladite pluralité affichée de réponse ; et
émettre un signal depuis le récepteur d'appel de personne (15) pour accuser réception du signal d'appel de personne, ledit signal émis indiquant la réponse, désignée par l'utilisateur, à la question du signal d'appel de personne reçu.

2. Dispositif d'appel de personne (15) pour accuser réception d'un signal d'appel de personne émis depuis un émetteur central (13) d'un système d'appel de personne comportant un récepteur d'accusé de réception (14), le dispositif d'appel de personne (15) comprenant :
un récepteur de dispositif d'appel de personne à distance (19) ayant une adresse prédéterminée et une sortie ;
un décodeur de signaux d'adresse (20) couplé à la sortie dudit récepteur de dispositif d'appel de personne à distance (19) et fournissant un signal de validation indicateur et un signal de validation d'accusé de réception lorsque des signaux codés avec l'adresse prédéterminée dudit récepteur d'appel de personne à distance (19) sont reçus ;
un moyen indicateur (22) couplé audit récepteur d'appel de personne à distance (19) et audit décodeur de signaux d'adresse (20) pour indiquer des signaux d'appel de personne reçus à partir dudit récepteur d'appel de personne à distance (19) en réponse à la réception d'un signal de validation d'indicateur à partir dudit décodeur des signaux d'appel (20) ;
un codeur de signaux d'accusés de réception comportant un appareil (29-32) pour générer une pluralité de signaux d'accusés de réception codés différemment et un moyen (A-D) pour sélectionner un signal souhaité parmi une pluralité de signaux d'accusés de réception codés différemment, ledit codeur étant couplé pour recevoir le signal de validation d'accusé de réception dudit décodeur de signaux d'adresse (20) et pour fournir le signal choisi parmi la pluralité de signaux d'accusés de réception codés différemment en réponse au fonctionnement dudit moyen sélecteur ; et
un émetteur de dispositif d'appel de personne à distance (18) couplé audit codeur de signaux d'accusés de réception pour en recevoir le signal chois parmi la pluralité de signaux d'accusés de réception codés différemment et pour émettre un signal codé avec le signal choisi parmi la pluralité de signaux d'accusés de réception codés différemment pour accuser réception du signal d'appel de personne.
